# DEMANDE DE BREVET EUROPEEN

(11) **EP 0 856 984 A1**
(43) Date de publication de la demande: **05.08.1998**
(21) Numéro de dépôt: 98200133.1
(22) Date de dépôt: 20.01.1998
(51) Int. Cl.: H04M 19/08

(54) **Circuit d'alimentation absorbent un courant constant et appareil téléphonique mettant en oeuvre un tel circuit**

(30) Priorité: 28.01.1997 FR 9700896
(71) Demandeur: Philips Electronics N.V., 5621 BA Eindhoven (NL)
(72) Inventeur: Bailly, Patrick, 75008 Paris (FR)
(74) Mandataire: Caron, Jean

(57) **Abrégé**

La présente invention concerne un circuit d'alimentation SC recevant un courant d'alimentation IS sous une tension d'entrée VLN et destiné à délivrer une tension VDD, comportant :
. une capacité CS,
. un premier transistor T1 permettant la charge de la capacité CS au moyen du courant d'alimentation IS,
. un deuxième transistor T2 permettant l'interruption de la dite charge en déviant le courant d'alimentation IS vers la borne de référence VSS, et
. un module dit de contrôle T3, T4, commandant la conduction des premier et deuxième transistors T1 et T2, en fonction des valeurs des tensions d'entrée et de sortie VLN et VDD.

Selon l'invention, le circuit d'alimentation SC comporte en outre un module de mesure permettant un asservissement de la valeur du courant d'alimentation IS.

Applications : alimentation de circuits au sein d'un appareil téléphonique.

## Description

La présente invention concerne un circuit d'alimentation pour appareil téléphonique, muni d'une borne d'entrée, d'une borne de sortie et d'une borne de référence dont le potentiel est destiné à servir de référence de potentiel pour l'ensemble du circuit, la borne d'entrée et la borne de référence étant destinées à être reliées, via un pont redresseur, à une ligne téléphonique, et à recevoir et à délivrer un courant appelé courant d'alimentation, circuit d'alimentation comportant :
. une capacité disposée entre la borne de sortie et la borne de référence,
. un premier transistor dont le trajet collecteur-émetteur est disposé entre la première borne d'entrée et la borne de sortie,
. un deuxième transistor dont le trajet collecteur-émetteur est disposé entre la borne d'entrée et la borne de référence, et
. un module dit de contrôle destiné à effectuer une comparaison entre le potentiel de la borne d'entrée et celui de la borne de sortie, et à introduire dans les bases des premier et deuxième transistors respectivement un courant dit de conduction et un courant qui lui est complémentaire, les valeurs des dits courants dépendant du résultat de la comparaison, leur somme étant appelée courant de polarisation.

Un tel circuit d'alimentation est connu de la demande de brevet européen No. 0 681 389 A2. La fonction de ce circuit est de délivrer à sa borne de sortie une tension destinée, après avoir été régulée au moyen d'un dispositif approprié, à servir de tension d'alimentation à d'autres circuits au sein de l'appareil téléphonique. Dans ce circuit d'alimentation, le premier transistor est rendu conducteur au moyen du courant de conduction lorsque le potentiel de la borne de sortie est inférieur à celui de la borne d'entrée. Ceci permet la charge de la capacité au moyen du courant d'alimentation. Lorsque ce dernier est plus important que le courant nécessaire à la charge de la capacité dans les conditions normales de fonctionnement du circuit, le surplus de courant est dévié vers la borne de référence au travers du deuxième transistor dont la base reçoit alors un courant complémentaire au courant de conduction de valeur suffisamment importante pour amorcer la conduction du dit deuxième transistor. Si le potentiel de la borne d'entrée devient inférieur à celui de la borne de sortie, le deuxième transistor reçoit sur sa base un courant suffisamment important pour lui permettre de conduire la totalité du courant d'alimentation, la conduction du premier transistor, et donc la charge de la capacité, étant alors interrompues.

Ce fonctionnement permet théoriquement au circuit d'alimentation de fournir une tension de sortie utilisable à des fins d'alimentation, tout en prélevant un courant d'alimentation de valeur constante. En effet, si la valeur du courant prélevé était amenée à varier, cela provoquerait une altération d'informations qui sont matérialisées, dans un appareil téléphonique, par la composante alternative d'un courant, appelé courant de ligne, depuis lequel est prélevé le courant d'alimentation.

Néanmoins, il est connu que le gain d'un transistor est dépendant de la valeur du courant qui traverse sa jonction collecteur-émetteur. Une forte variation du courant qui les traverse entraîne donc une variation sensible du gain instantané des premier ou deuxième transistors. Si le courant de polarisation est maintenu constant, ceci signifie que le courant absorbé par le circuit d'alimentation peut alors être amené à varier. De plus, une variation des tensions collecteur-émetteur des premier et deuxième transistors due à des variations du potentiel de la borne d'entrée introduit, du fait de l'effet Early, des variations des valeurs des courants qui traversent les dits transistors. Ces phénomènes provoquent des variations dans la valeur du courant absorbé par le circuit d'alimentation, et perturbent ainsi les informations véhiculées par le courant de ligne, ce qui n'est pas acceptable.

La présente invention a pour but de remédier à cet inconvénient, en proposant un circuit d'alimentation dans lequel le courant absorbé par le circuit d'alimentation est soumis à un asservissement de manière à ce que sa valeur soit pratiquement constante.

En effet, un circuit d'alimentation conforme au paragraphe introductif est caractérisé selon l'invention en ce qu'il comporte en outre un module dit de mesure muni de moyens pour effectuer une comparaison entre la valeur du courant d'alimentation et un seuil prédéterminé, et pour faire varier la valeur du courant de polarisation dans le sens inverse des variations du résultat de la dite comparaison.

Dans un tel circuit d'alimentation, si, par exemple, le courant d'alimentation augmente de façon significative, c'est-à-dire au delà de la valeur du seuil, cette variation est détectée et provoque une diminution du courant de polarisation, et donc des valeurs des courants de base des premier et deuxième transistors, de sorte que le courant effectivement prélevé par le circuit d'alimentation, qui est par exemple égal au produit entre le gain et le courant de conduction dans le cas où seul le premier transistor est conducteur, conserve une valeur constante.

Un mode de réalisation particulier de l'invention présente un circuit d'alimentation tel que décrit ci-dessus, caractérisé en ce que le module de contrôle comporte un troisième et un quatrième transistors montés en paire différentielle, les bases des dits transistors étant respectivement reliées à la borne d'entrée et à la borne de sortie, leurs collecteurs étant respectivement reliés aux bases des premier et deuxième transistors, la paire différentielle étant destinée à être polarisée au moyen du courant de polarisation.

Une telle structure du module de contrôle permet de gérer de manière simple la conduction des premier et deuxième transistors, les potentiels des bornes d'entrée et de sortie déterminant les proportions relatives des courants de collecteur des troisième et quatrième transistors, et donc le comportement des premier et deuxième transistors dont les bases sont parcourues par les dits courants. L'évolution des courants de collecteur des troisième et quatrième transistors en fonction des valeurs des potentiels des bornes d'entrée et de sortie permet de plus un aiguillage progressif du courant d'un transistor à l'autre, ce qui permet d'éviter la génération de bruit dans le courant d'alimentation, et donc dans le courant de ligne, qui aurait lieu en cas de commutation instantanée d'un transistor à l'autre.

Un mode de réalisation avantageux de l'invention est caractérisé en ce que le module de mesure comporte :
. un miroir de courant dont une branche, dite d'entrée, est reliée à une première source de courant délivrant un premier courant de valeur prédéterminée, et dont une branche, dite de sortie, est reliée aux émetteurs interconnectés des transistors de la paire différentielle,
. un diviseur de courant muni d'une entrée destinée à recevoir un signal représentatif du courant d'alimentation et d'une sortie destinée à délivrer un courant dont la valeur est une fraction de celle du courant d'alimentation,
. une deuxième source de courant destinée à débiter un deuxième courant de valeur prédéterminée, reliée entre la sortie du diviseur de courant et la borne de référence, et
. un cinquième transistor dont la base est reliée à la sortie du diviseur de courant, et dont le trajet collecteur-émetteur est disposé entre la branche d'entrée du miroir de courant et la borne de référence.

Ce mode de réalisation est avantageux du fait de la simplicité et de la flexibilité de sa mise en oeuvre. En effet, dans ce circuit d'alimentation, le courant de polarisation est égal, dans une première phase dite de démarrage, à la valeur du courant délivré par la première source de courant. Lorsque, dans une deuxième phase dite phase permanente, le courant de sortie du diviseur de courant devient supérieur à la valeur du courant délivré par la deuxième source de courant, ce qui équivaut à une valeur du courant d'alimentation supérieure à un seuil dont la valeur est donnée par le produit entre la valeur du courant délivré par la deuxième source de courant et le rapport entre la valeur du courant d'alimentation et celle du courant de sortie du diviseur, le cinquième transistor entre en conduction et dévie une partie du courant délivré par la première source de courant vers la borne de référence, réduisant ainsi la valeur du courant de polarisation. La valeur de ce courant dévié est d'autant plus importante que l'écart entre la valeur du courant de ligne et le seuil est important. L'ampleur de la compensation effectuée est ainsi automatiquement adaptée à l'ampleur de la variation du courant d'alimentation.

Un tel circuit d'alimentation peut être mis en oeuvre pour l'alimentation électrique de divers circuits au sein d'un appareil téléphonique. L'invention concerne donc également un appareil téléphonique comportant :
. un pont redresseur muni de deux bornes, dites alternatives, destinées à être reliées à une ligne téléphonique, d'une première et d'une deuxième bornes, dites continues, destinées respectivement à délivrer et à recevoir un courant redressé appelé courant de ligne,
. un module d'interface connecté entre les bornes continues et notamment destiné à effectuer un traitement des informations véhiculées par le courant de ligne, et
. un micro-contrôleur destiné à recevoir et à gérer des commandes données par un utilisateur de l'appareil, muni d'une borne positive et d'une borne négative d'alimentation, laquelle est reliée à l'une des bornes continues du pont redresseur,
caractérisé en ce qu'il comporte en outre :
. un circuit d'alimentation tel que décrit plus haut, dont les bornes d'entrée sont reliées aux bornes continues du pont redresseur, et dont la borne de sortie est reliée à la borne positive d'alimentation du micro-contrôleur, et
. un module de régulation de tension connecté entre la borne de sortie du circuit d'alimentation et la borne de référence, destiné à maintenir constante la valeur moyenne du potentiel de la dite borne de sortie.

L'invention sera mieux comprise à l'aide de la description suivante, faite à titre d'exemple non-limitatif et en regard des dessins annexés, dans lesquels :
- la figure 1 présente un schéma électrique décrivant un circuit d'alimentation conforme à un mode de réalisation avantageux de l'invention, et
- la figure 2 présente un diagramme fonctionnel décrivant schématiquement un appareil téléphonique incluant un circuit d'alimentation selon l'invention.

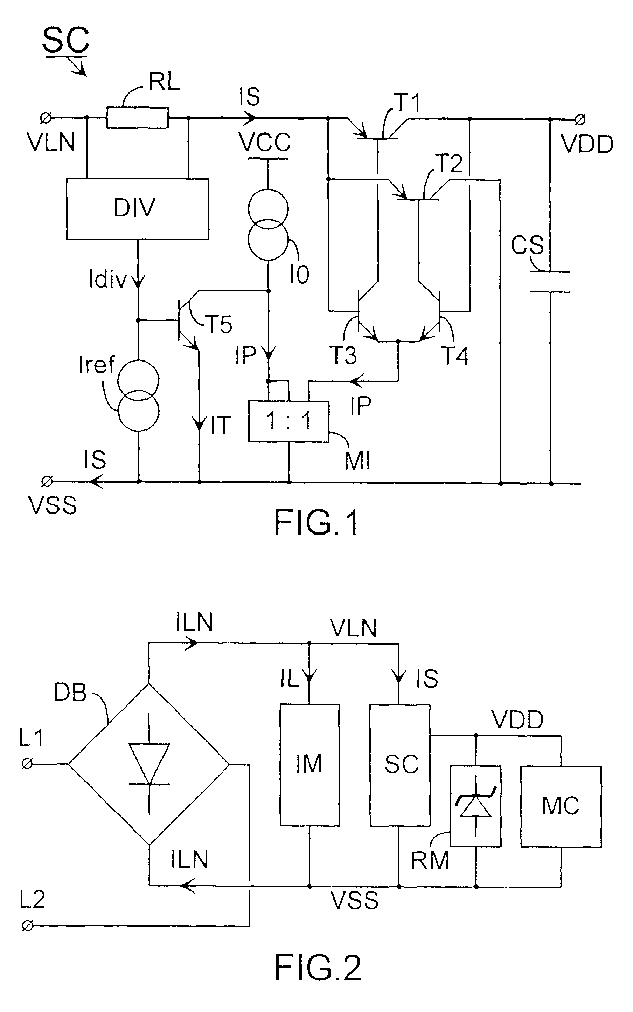

La figure 1 représente schématiquement un circuit d'alimentation SC conforme à l'invention. Ce circuit d'alimentation est muni d'une borne d'entrée, placée à un potentiel VLN, d'une borne de sortie destinée à délivrer une tension VDD et d'une borne de référence dont le potentiel VSS est destiné à servir de référence de potentiel pour l'ensemble du circuit. La borne d'entrée et la borne de référence sont destinées à être reliées, via un pont redresseur, à une ligne téléphonique, et à délivrer et à recevoir un courant appelé courant d'alimentation IS. Ce circuit d'alimentation SC comporte :
. une capacité CS disposée entre la borne de sortie et la borne de référence,
. un premier transistor T1 dont le trajet collecteur-émetteur est disposé entre la première borne d'entrée et la borne de sortie,
. un deuxième transistor T2 dont le trajet collecteur-émetteur est disposé entre la borne d'entrée et la borne de référence, et
. un module dit de contrôle qui comporte un troisième et un quatrième transistors T3, T4, montés en paire différentielle, les bases des dits transistors T3, T4, étant respectivement reliées à la borne d'entrée et à la borne de sortie, leurs collecteurs étant respectivement reliés aux bases des premier et deuxième transistors, T1, T2, la paire différentielle étant destinée à être polarisée au moyen d'un courant de polarisation IP.

La paire différentielle T3, T4, effectue une comparaison entre le potentiel VLN de la borne d'entrée et le potentiel VDD de la borne de sortie. Les courants de collecteur des transistors T3 et T4 sont complémentaires et commandent la conduction des premier et deuxième transistors T1, T2, respectivement. Si le potentiel VLN de la borne d'entrée est supérieur au potentiel VDD de la borne de sortie, le troisième transistor T3 est conducteur tandis que le quatrième transistor T4 est bloqué. Le premier transistor T1 est donc conducteur tandis le deuxième transistor T2 est bloqué. Ceci permet la charge de la capacité CS au moyen du courant d'alimentation IS. Si les potentiels VLN et VDD sont voisins, les troisième et quatrième transistors T3 et T4 conduisent chacun une portion du courant de polarisation IP qui dépend des valeurs relatives des potentiels VLN et VDD. Les premier et deuxième transistors T1 et T2 conduisent alors chacun une portion du courant d'alimentation IS qui dépend également des valeurs relatives des potentiels VLN et VDD. La charge de la capacité CS est donc maintenue. Enfin, si le potentiel VLN de la borne d'entrée est inférieur au potentiel VDD de la borne de sortie, le troisième transistor T3 est bloqué tandis que le quatrième transistor T4 est conducteur. Le premier transistor T1 est donc bloqué tandis le deuxième transistor T2 est conducteur. La totalité du courant d'alimentation IS est donc déviée vers la borne de référence au travers du deuxième transistor T2, et la charge de la capacité CS est interrompue. Ladite capacité CS fournit cependant la tension VDD qui a été stockée à ses bornes. La borne de sortie fournit donc une tension VDD, même dans les cas où le potentiel VLN de la borne d'entrée subit une forte diminution momentanée. Il est d'autre part possible de prévoir l'introduction entre les bornes d'entrée et de sortie et les bases des troisième et quatrième transistors T3 et T4, respectivement, de sources de tensions de décalage permettant d'ajuster de façon plus fine les conditions de conduction des troisième et quatrième transistors T3 et T4, et donc des premier et deuxième transistors T1 et T2, particulièrement dans la zone où le potentiel VLN de la borne d'entrée et le potentiel VDD de la borne de sortie sont voisins.

Le circuit d'alimentation SC comporte en outre un module dit de mesure muni de moyens pour effectuer une comparaison entre la valeur du courant d'alimentation IS et un seuil prédéterminé, et pour faire varier la valeur du courant de polarisation IP dans le sens inverse des variations du résultat de la dite comparaison. Dans l'exemple représenté sur la figure 1, ce module de mesure comporte :
. un miroir de courant MI dont une branche, dite d'entrée, est reliée à une première source de courant I0 délivrant un premier courant de valeur prédéterminée, et dont une branche, dite de sortie, est reliée aux émetteurs interconnectés des transistors T3, T4, de la paire différentielle,
. un diviseur de courant DIV muni d'une entrée destinée à recevoir un signal représentatif du courant d'alimentation IS, constitué ici par une tension présente aux bornes d'une résistance RL parcourue par le dit courant IS, et d'une sortie destinée à délivrer un courant Idiv dont la valeur est une fraction de celle du courant d'alimentation, c'est-à-dire par exemple Idiv=IS/N,
. une deuxième source de courant Iref destinée à débiter un deuxième courant de valeur prédéterminée, reliée entre la sortie du diviseur de courant DIV et la borne de référence, et
. un cinquième transistor T5 dont la base est reliée à la sortie du diviseur de courant DIV, et dont la jonction collecteur-émetteur est disposée entre la branche d'entrée du miroir de courant MI et la borne de référence.

Dans ce mode de réalisation, le courant de polarisation IP est égal, pendant la phase de démarrage, à la valeur du courant délivré par la première source de courant I0. Lorsque, au début de la phase permanente, le courant de sortie Idiv du diviseur de courant DIV devient supérieur à la deuxième valeur prédéterminée Iref, ce qui équivaut à une valeur du courant d'alimentation IS supérieure à un seuil dont la valeur est donnée par N.Iref, le cinquième transistor T5 entre en conduction et dévie vers la borne de référence une partie IT du courant délivré par la première source de courant 10. La valeur du courant de polarisation IP diminue donc et est égale à IO-IT. Le courant IS effectivement prélevé pour la charge de la capacité CS, dont la valeur est égale à β(T1).IP, où β(T1) représente le gain du premier transistor T1, conserve donc une valeur moyenne constante. Le temps de réaction de la boucle d'asservissement décrite ci-dessus est suffisamment faible devant la période de la composante alternative du courant de ligne pour que les variations instantanées du courant d'alimentation IS soient sans effet sur les informations véhiculées par le dit courant de ligne. La valeur du courant dévié IT est d'autant plus importante que l'écart entre la valeur du courant d'alimentation IS et le seuil N.Iref est important. L'ampleur de la compensation effectuée est ainsi automatiquement adaptée à l'ampleur de la variation du courant d'alimentation IS.

Si, dans l'exemple décrit par la figure 1, les transistors T1 et T2 sont des transistors de type PNP et le transistor T5 est un transistor NPN, il est tout-à-fait envisageable d'employer des transistors de polarités opposées en conservant une structure similaire dans son principe à celle décrite plus haut, moyennant quelques aménagements aisément concevables et réalisables par l'homme du métier. Enfin, dans le circuit représenté sur la figure 1, la source de courant I0 est disposée entre le collecteur du cinquième transistor T5 et une source de tension externe. Dans une variante de ce mode de réalisation, il est possible de relier le dit collecteur à la branche de sortie d'un deuxième miroir de courant dont la branche d'entrée serait connectée à la borne de référence via la première source de courant I0.

La figure 2 représente schématiquement un appareil téléphonique dans lequel un circuit de régulation conforme à l'invention est mis en oeuvre pour générer une tension servant à l'alimentation électrique d'au moins un autre circuit inclus dans le dit appareil. Cet appareil téléphonique comporte :
. un pont redresseur DB muni de deux bornes L1 et L2, dites alternatives, destinées à être reliées à une ligne téléphonique, d'une première et d'une deuxième bornes, dites continues, destinées respectivement à délivrer et à recevoir un courant redressé ILN appelé courant de ligne,
. un module d'interface IM connecté entre les bornes continues et notamment destiné à effectuer un traitement des informations véhiculées par le courant de ligne ILN, et
. un micro-contrôleur MC destiné à recevoir et à gérer des commandes données par un utilisateur de l'appareil, muni d'une borne positive et d'une borne négative d'alimentation, laquelle est reliée à l'une des bornes continues du pont redresseur DB.

Cet appareil téléphonique comporte en outre un circuit d'alimentation SC tel que décrit plus haut dont les bornes d'entrée sont reliées aux bornes continues du pont redresseur DB, et dont la borne de sortie est reliée à la borne positive d'alimentation du micro-contrôleur MC, et
. un module de régulation de tension RM connecté entre la borne de sortie du circuit d'alimentation et la borne de référence, destiné à maintenir constante la valeur moyenne du potentiel VDD de la dite borne de sortie.

Cette structure permet de fournir au micro-contrôleur MC une tension d'alimentation régulée VDD, dont la valeur dépend du type module de régulation employé, et qui peut être par exemple de l'ordre de 3,3 Volts lorsque le dit module est constituée d'une diode Zéner. Cette tension VDD est élaborée au moyen du courant d'alimentation IS, dont la valeur de la composante continue est faible devant celle du courant de ligne ILN, par le circuit d'alimentation SC sans que les informations matérialisées par la composante alternative du courant de ligne ILN ne soient perturbées.

## Revendications

1. Circuit d'alimentation pour appareil téléphonique, muni d'une borne d'entrée, d'une borne de sortie et d'une borne de référence dont le potentiel est destiné à servir de référence de potentiel pour l'ensemble du circuit, la borne d'entrée et la borne de référence étant destinées à être reliées, via un pont redresseur, à une ligne téléphonique, et à recevoir et à délivrer un courant appelé courant d'alimentation, circuit d'alimentation comportant :
. une capacité disposée entre la borne de sortie et la borne de référence,
. un premier transistor dont le trajet collecteur-émetteur est disposé entre la première borne d'entrée et la borne de sortie,
. un deuxième transistor dont le trajet collecteur-émetteur est disposé entre la borne d'entrée et la borne de référence, et
. un module dit de contrôle destiné à effectuer une comparaison entre le potentiel de la borne d'entrée et celui de la borne de sortie, et à introduire dans les bases des premier et deuxième transistors respectivement un courant dit de conduction et un courant qui lui est complémentaire, les valeurs des dits courants dépendant du résultat de la comparaison, leur somme étant appelée courant de polarisation,
caractérisé en ce qu'il comporte en outre un module dit de mesure muni de moyens pour effectuer une comparaison entre la valeur du courant d'alimentation et un seuil prédéterminé, et pour faire varier la valeur du courant de polarisation dans le sens inverse des variations du résultat de la dite comparaison.

2. Circuit d'alimentation selon la revendication 1, caractérisé en ce que le module de contrôle comporte un troisième et un quatrième transistors montés en paire différentielle, les bases des dits transistors étant respectivement reliées à la borne d'entrée et à la borne de sortie, leurs collecteurs étant respectivement reliés aux bases des premier et deuxième transistors, la paire différentielle étant destinée à être polarisée au moyen du courant de polarisation.

3. Circuit d'alimentation selon la revendication 2, caractérisé en ce que le module de mesure comporte :
. un miroir de courant dont une branche, dite d'entrée, est reliée à une première source de courant délivrant un premier courant de valeur prédéterminée, et dont une branche, dite de sortie, est reliée aux émetteurs interconnectés des transistors de la paire différentielle,
. un diviseur de courant muni d'une entrée destinée à recevoir un signal représentatif du courant d'alimentation et d'une sortie destinée à délivrer un courant dont la valeur est une fraction de celle du courant d'alimentation,
. une deuxième source de courant destinée à débiter un deuxième courant de valeur prédéterminée, reliée entre la sortie du diviseur de courant et la borne de référence, et
. un cinquième transistor dont la base est reliée à la sortie du diviseur de courant, et dont le trajet collecteur-émetteur est disposé entre la branche d'entrée du miroir de courant et la borne de référence.

4. Appareil téléphonique comportant :
. un pont redresseur muni de deux bornes, dites alternatives, destinées à être reliées à une ligne téléphonique, d'une première et d'une deuxième bornes, dites continues, destinées respectivement à délivrer et à recevoir un courant redressé appelé courant de ligne,
. un module d'interface connecté entre les bornes continues et notamment destiné à effectuer un traitement des informations véhiculées par le courant de ligne, et
. un micro-contrôleur destiné à recevoir et à gérer des commandes données par un utilisateur de l'appareil, muni d'une borne positive et d'une borne négative d'alimentation, laquelle est reliée à l'une des bornes continues du pont redresseur,
caractérisé en ce qu'il comporte en outre :
. un circuit d'alimentation conforme à l'une quelconque des revendications 1 à 3, dont les bornes d'entrée sont reliées aux bornes continues du pont redresseur, et dont la borne de sortie est reliée à la borne positive d'alimentation du micro-contrôleur, et
. un module de régulation de tension connecté entre la borne de sortie du circuit d'alimentation et la borne de référence, destiné à maintenir constante la valeur moyenne du potentiel de la dite borne de sortie.
